# EUROPEAN PATENT APPLICATION

(11) **EP 2 068 575 A1**
(43) Date of publication of application: **10.06.2009**
(21) Application number: 07828954.3
(22) Date of filing: 01.10.2007
(51) Int. Cl.: H04Q 7/36, H04B 7/26

(54) **CQI REPORT METHOD, RADIO RESOURCE ALLOCATION METHOD, BASE STATION DEVICE, AND USER TERMINAL**

(30) Priority: 03.10.2006 JP 2006272351
(71) Applicant: NTT DoCoMo, Inc., Chiyoda-ku Tokyo 100-6150 (JP)
(72) Inventor: OFUJI, Yoshiaki, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/069214
(87) International publication number: WO 2008/044529

(57) **Abstract**

A CQI report method disclosed that includes a step in which the user equipment reports CQI information of top N resource block(s) having channel quality higher than the rest of the resource block(s) and a resource block number(s) of the top N resource block(s) to the base station at CQI report timings designated by the base station; and a step in which, when, for example, a resource block(s) whose CQI information has already been reported in any of the latest K report timings is included in the top N resource block(s), the user equipment excludes the resource block(s) and reports the CQI information of a resource block having the next highest channel quality indicator and the resource block number of the resource block to the base station.

## Description

### TECHNICAL FIELD

The present invention generally relates to a radio communication control technique, and more particularly to a method of controlling the number of bits representing CQI information reported from user equipment to a base station, a method of allocating radio resources based on the control method, and configurations of the base station and the user equipment in which the above methods are implemented.

### BACKGROUND ART

CQI (Channel Quality Indicator) information is reported from user equipment to a base station so that the base station can perform an appropriate frequency scheduling in consideration of the channel quality indicator in a downlink shared data channel. In HSDPA (High Speed Downlink packet Access) standardized by 3GPP, a dedicated physical channel (DPCH) is used for reporting the CQI information.

At present, standardization of LTE (Long Term Evolution) as a mobile communication system having even faster speed and larger capacity than the HSDPA is being pursued. In a network configuration of the LTE (evolved UTRAN), a shared control channel (SCCH) is determined to be used for reporting CQI in an uplink.

In this case, it is necessary for the base station to control the allocation of an uplink radio resource for CQI feedback. In order to effectively use radio resources and increase system throughput, it is necessary to reduce the number of bits representing the CQI information to be reported in an uplink to obtain a sufficient effect of the frequency scheduling.

As a method of reducing the number of bits for the CQI feedback in an uplink, a method has been proposed in which a measurement result of a pilot channel in each resource block is represented in a form of a 0/1 bit sequence (see, for example, Non Patent Document 1). In this method, when a measurement result (CQI) of each resource block (RB) is reported to the base station, first, an average value of all resource blocks is reported, and second, mapping information is reported in which bit "1" is mapped to the resource blocks having the measurement result (CQI) equal to or higher than the average value and bit "0" is mapped to the rest of the resource blocks to the base station. The base station recognizes that the resource bock to which bit "1" is mapped has at least the average CQI value as reported and that the resource block to which bit "0" is mapped has a few dB (x DB) lower value than the average value, and performs scheduling based on the recognition.

In this document, to further reduce the number of the bits to be used for the CQI report, a method is further proposed in which in a step (at time of t=0), CQI values of every other resource block (for example, having even numbers) are represented as "0" or "1" and reported, and in the next step (at time of t=1), CQI values of the resources blocks whose CQI value are not reported in the previous step (at time of t=0) (for example, resource blocks having odd numbers) are represented as "0" or "1" and reported. In the base station, with respect to resource blocks whose CQI value are not reported, previous CQI values corresponding to the resource blocks are used to perform time interpolation.
Non Patent Document 1: Motorola, R1-060018, "Performance Evaluation of EUTAN Downlink CQI Feedback Schemes", 3GPP TSG RAN1#44, Helsinki, Finland, January 23-25, 2006

### DISCLOSURE OF INVENTION

### PROBLEMS TO BE SOLVED BY THE INVENTION

According to an embodiment of the present invention, there is provided a CQI report method that may, when a frequency scheduling (multi-user scheduling) is to be performed, reduce the number of bits representing CQI information to be reported from user equipment to a base station and sufficiently obtain an effect of the frequency scheduling.

Further, according to another embodiment of the present invention, there is provided an uplink radio resource allocation method for reporting the CQI.

Further, according to still another embodiment of the present invention, there is provided a configuration of the base station and a configuration of the user equipment in which the above CQI report method and the radio resource allocation method may be implemented.

### MEANS FOR SOLVING THE PROBLEMS

According to a first aspect of the present invention, there is provided a CQI report method of reporting from a user equipment to a base station, the method including
(a) a step in which the user equipment reports CQI information of top N resource block(s) having a channel quality higher than the rest of the resource block(s) and a resource block number(s) of the top N resource block(s) to the base station at CQI report timings designated by the base station; and
(b) a step in which, when a resource block(s) whose CQI information has already been reported in any of the latest K report timings is included in the top N resource block(s) or when a resource block(s) whose CQI information has already been reported in any of the latest K report timings and difference between current CQI and CQI reported in any of the latest K report timings is not higher than a predetermined improvement value, the user equipment excludes the resource block(s) and reports the CQI information of a resource block having the next highest channel quality indicator and the resource block number of the resource block to the base station.

In a preferred aspect of the present invention, the user equipment may receive a control signal reporting the values of N and K from the base station. Therefore, based on the received values of N and K, the user equipment may select the CQI information of the top N resource block(s) and reports the selected CQI information to the base station.

Further, the base station may report the values of N and K to the user equipment by using an upper layer signaling.

According to a second aspect of the present invention, there is provided a CQI report method of reporting from a user equipment to a base station, the method including
(a) a step in which the user equipment reports an average CQI value across a frequency band of received signals to the base station at regular intervals in the report timings assigned by the base station; and
(b) a step in which, when there are n report timings between a report timing of reporting the average CQI value and the next report timing of reporting the average CQI value, at m (1≦m≦n) report timing, the user equipment reports information of a resource block(s) having the CQI value(s) higher than the average CQI value by m (1≦m≦n) level or more to the base station.

In a preferred aspect of the present invention the base station may report relationships between the report timings and the corresponding levels by which the CQI value(s) should be higher than the average CQI value to the user equipment, and based on the reported relationships, at first and second report timings, the block number(s) of the resource block(s) having a CQI value(s) higher than the average CQI value by first and second levels, respectively, or more is reported to the base station.

As an example, at first and second report timings, bit strings may be reported as CQI information to the base station, the bit strings being generated by mapping binary code in which the resource block(s) having the CQI value(s) higher than the average CQI value by first and second levels, respectively, or more and the rest of the resource block(s) are represented.

According to a third aspect of the present invention, there is provide an uplink radio resource allocation method for CQI feedback from a user equipment, the method including
(a) a step of reporting an allocation cycle of a radio resource(s) and an allocated radio resource(s) for the CQI feedback to the user equipment so that the user equipment reports CQI information to a base station;
(b) a step in which the base station receives and stores the CQI information from the user equipment at the allocation cycle using the allocated radio resource(s) ; and
(c) a step of changing at least one of the allocation cycle of the radio resource(s) for the CQI feedback and an amount of the allocated radio resource(s) based on at least the CQI information and a moving speed of the user equipment.
   In a preferred aspect, the uplink radio resource allocation method may further include
(d) a step in which the base station reports the allocation cycle, the allocated radio resource(s), and the result of the change to the user equipment using an upper layer signaling.

According to a fourth aspect of the present invention, there is provided a base station apparatus including
(a) a CQI information restoration storage section configured to restore CQI information reported from a user equipment and store the CQI information on a resource block to resource block basis; and
(b) a CQI report parameter determination section configured to, based on the CQI information, determine CQI report parameters serving as indicators when the user equipment reports the CQI information.

Based on the current CQI report parameters determined by the CQI report parameter determination section, the CQI information restoration storage section resets the stored CQI information when a predetermined effective period is elapsed from when the CQI information is reported.

In a preferred aspect, the CQI report parameter determination section may determine the CQI report parameters based on at least the CQI information reported from the user equipment and a moving speed of the user equipment.

In another preferred aspect, the base station apparatus may further include an upper layer control signal generation section configured to generate an upper layer control signal to report the CQI information parameters.

According to a fifth aspect of the present invention, there is provided a user equipment including
(a) a CQI estimation section configured to estimate downlink channel quality with respect to each resource block in a frequency band of received signals;
(b) a receive section configured to receive an upper layer control signal including allocation cycle of uplink radio resource, allocated radio resources, and report parameters to be used for reporting to report CQI information to a base station;
(c) a CQI information generation section configured to generate CQI information from the CQI estimation result based on the report parameters; and
(d) a transmission section configured to transmit the generated CQI information to the base station at allocation cycle of the radio resource using the allocated radio resources.

In a preferred aspect, the CQI information generation section may generate the CQI information including top N resource block(s) having higher estimated CQI value(s) and resource block number(s) of the top N resource block(s).

In another preferred aspect, based on the report parameters, at a first report timing, the CQI information generation section may generate a signal reporting a resource block(s) having CQI higher than an average CQI across the frequency band of received signals by a first level or more, and at a second report timing, the CQI information generation section generates a signal reporting a resource block(s) having CQI higher than an average CQI across the frequency band of received signals by a second level or more.

### ADVANTAGEOUS EFFECT OF THE INVENTION

It may become possible to reduce the number of bits representing CQI information and appropriately allocate radio resources for the CQI feedback by implementing at least one of the above CQI report method, the radio resource allocation method, the configuration of the base station, and the configuration of the user equipment.

As a result, it may become possible to effectively use radio resources and improve the system throughput.

### BRIEF DESCRIPTION OF THE DRAWINGS

FIG. 1 is a drawing schematically showing a first CQI measurement/report method according to an embodiment of the present invention;
FIG. 2 is a drawing schematically showing an example of the CQI report method of FIG. 1 where a CQI value stored in a base station is reduced in accordance with elapsed time from when the CQI value is received;
FIG. 3 is a drawing schematically showing a second CQI measurement/report method according to another embodiment of the present invention;
FIG. 4 is a drawing schematically showing an example of an uplink radio resource allocation for CQI feedback from user equipment;
FIG. 5 is a block diagram schematically showing a configuration of the base station according to still another embodiment of the present invention; and
FIG. 6 is a block diagram schematically showing a configuration of the user equipment according to still another embodiment of the present invention.

### EXPLANATION OF REFERENCES

10: BASE STATION
13: SCHEDULER
31: UPLINK RECEIVED SIGNAL DEMODULATION SECTION
32: CQI REPORT PARAMETER DETERMINATION SECTION
33: CQI REPORT PARAMETER STORAGE SECTION
35: CQI INFORMATION RESTORATION STORAGE SECTION
36: L3 CONTROL SIGNAL GENERATION SECTION (UPPER

### LAYER CONTROL SIGNAL GENERATION SECTION)

40: USER EQUIPMENT
55: MOVING SPEED ESTIMATION SECTION
56: CQI ESTIMATION SECTION
57: CQI INFORMATION GENERATION SECTION
58: TRANSMISSION CONTROL SECTION

### BEST MODE FOR CARRYING OUT THE INVENTION

In the following, preferred embodiments of the present invention are described with reference to the drawings.

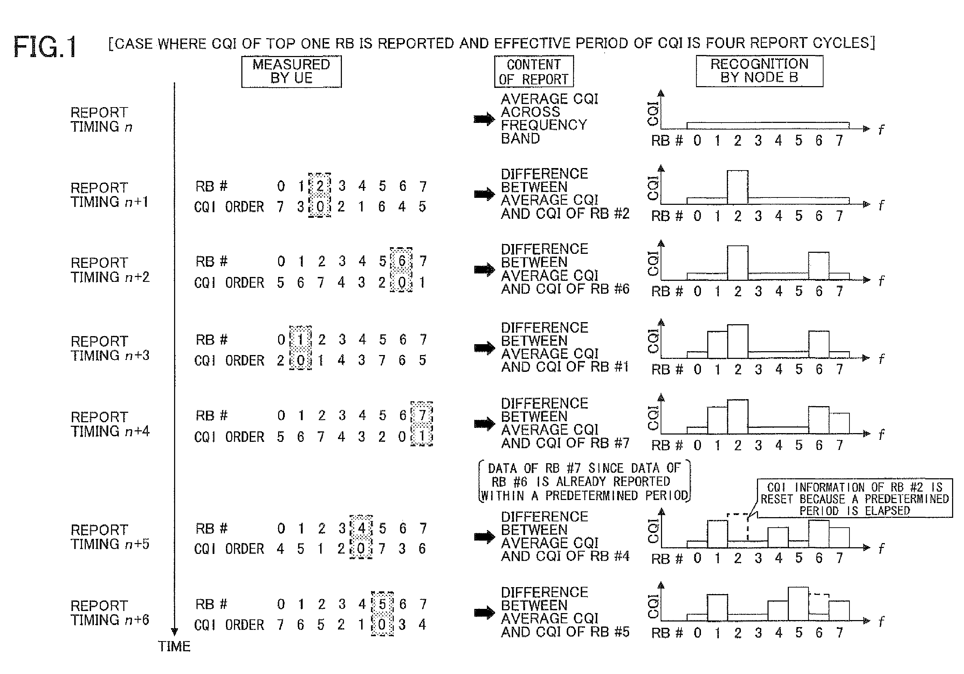

FIG. 1 shows a first example of a CQI measurement/report method according to an embodiment of the present invention. In the method, a base station (node B) reports a cycle of report timings of CQI (CQI report cycle) and an uplink radio resource to be used for a CQI report (CQI feedback) with respect to each user equipment by using an upper layer (L3) signaling. Details of the CQI report cycle and the method of allocating the uplink radio resource to be used for CQI feedback are described below.

In the example of FIG. 1, plural report timings n, n+1, n+2,... are provided with respect to each user equipment (UE). During the assigned report timings, the UE is required to report an average CQI value across the frequency band of received signals to the base station at regular intervals. For example, the UE reports the average CQI value to the base station (node B) at report timing n. After that, the UE reports CQI information with respect to each resource block at every assigned report timing until immediately before the next report timing when the UE is required to report the average CQI value again. The CQI information may be an absolute value of measured CQI or, as shown in the example of FIG.1, difference between the latest average CQI value and the measured CQI value.

FIG. 1 shows a case where the difference between the latest average CQI value and the measured CQI value is reported with respect to only the resource block (RB) having the highest CQI value. Theoretically, the number of bits representing CQI information may be reduced by extending a report cycle (i.e., reducing report frequency) and reporting only CQI of resource blocks having relatively better (higher) CQI without reporting the CQI with respect to all resource blocks. The latter method is adopted in the case of FIG. 1. In this case, the base station may variably determine the number of the CQI values with respect to higher ranked resource blocks (i.e., resource blocks having higher CQI values). In the case of FIG. 1, only the CQI information with respect to the highest ranked RB (resource block) is reported, which means that uplink radio resource necessary for reporting CQI with respect to one resource block is allocated for the CQI feedback. Therefore, as described below, when the base station requires even more CQI feedback to perform scheduling and an amount of radio resources for the CQI feedback allocated to a specific user equipment is increased, the UE will report CQI information with respect to, for example, two highest ranked resource blocks.

After reporting the average CQI value across the frequency band of received signals, at report timing n+1, the user equipment measures the CQI values again with respect to eight resource blocks #0 through #7 allocated for downlink. At this report timing n+1, the resource block #2 has the highest CQI value, followed by the order of resource blocks #4, #3, #1,... . Therefore, as the CQI information of the resource block #2, the UE reports the difference between the latest average CQI value and the measured CQI value of the RB #02 along with the corresponding resource block number to the base station.

Based on the report of the average value at report timing n, the base station recognizes that the average CQI value across all the resource blocks #0 through #07 is calculated. However, based on the report of CQI information of the resource block #2 at report timing n+1, the UE recognizes the actual CQI value (sum of the difference and the average value) with respect to the resource block #2.

At report timing n+2, as a result of measurement in the user equipment, the resource block #6 has the highest CQI value. Therefore, the UE reports the difference between the latest average CQI value and the measured CQI value of the resource block #06 and the corresponding resource block number to the base station. The base station adds the reported value to the average value to recognize the CQI value of the resource block #6.

In the same manner, at report timing n+3, the user equipment reports the resource block number and CQI information with respect to the resource block #1 where the highest CQI value is measured.

The base station stores the reported CQI information for a certain period. Therefore, the reported CQI information is successively accumulated. On the other hand, old CQI values that have been stored for a certain period are reset to the average value in the order of older to newer CQI values. For example, in the case of FIG. 1, the period in which the CQI reports are to be stored in the base station (hereinafter referred to as CQI effective period) is defined as four report timings. Namely, the CQI value that has been stored for four report cycles from when the CQI value is received is reset to the average value, However, before being reset, the reported value is stored.

At report timing n+4, the resource block #6 has the highest CQI value measured by the user equipment. However, the CQI value of the resource block #6 has been already reported in at least one of the latest four report timings which is the CQI effective period or a reset cycle. In this case, the user equipment reports the resource block number and CQI information with respect to the resource block #7 where the second highest CQI value is measured.

At report timing n+5, the resource block #4 has the highest CQI value. Then, the user equipment resets the CQI information of the resource block #2 reported at report timing n+1 to the average value.

At report timing n+6, the resource block number and CQI information with respect to the resource block #5 are reported. Then, the user equipment resets the CQI information of the resource block #6 reported at report timing n+2 to the average value.

As described above, in the CQI report method shown in FIG. 1, a base station (node B) reports a cycle of report timings of CQI (CQI report cycle) and an uplink radio resource to be used for CQI report (CQI feedback) with respect to each user equipment by using the upper layer (L3) signaling.

Each user equipment reports the average CQI value across the frequency band of received signals at predetermined report timings (at regular intervals). At other report timings, each user equipment reports the resource block number(s) and the CQI of the top N resource block(s) having a higher channel quality indicator. In this case, however, in the top N resource block(s), any resource block is excluded if the resource block has been already reported in at least one of the latest K report timings which is the CQI effective period (the reset cycle) or if the resource block whose CQI has been already reported in at least one of the latest K report timings and the difference between the current CQI and the CQI measured earlier is not higher than a predetermined improvement value (i.e., the CQI is not improved as compared to the predetermined improvement value). In this case, the values N and K are determined by the base station and reported to each user equipment by using the upper layer (L3) signaling.

The base station stores the CQI information reported from the user equipment in a memory and performs a scheduling based on the stored CQI information. The CQI information stored in the memory is reset to a reset value when a predetermined effective period (K report timings) is elapsed. The reset value may be the latest average CQI value across the frequency band or a predetermined value.

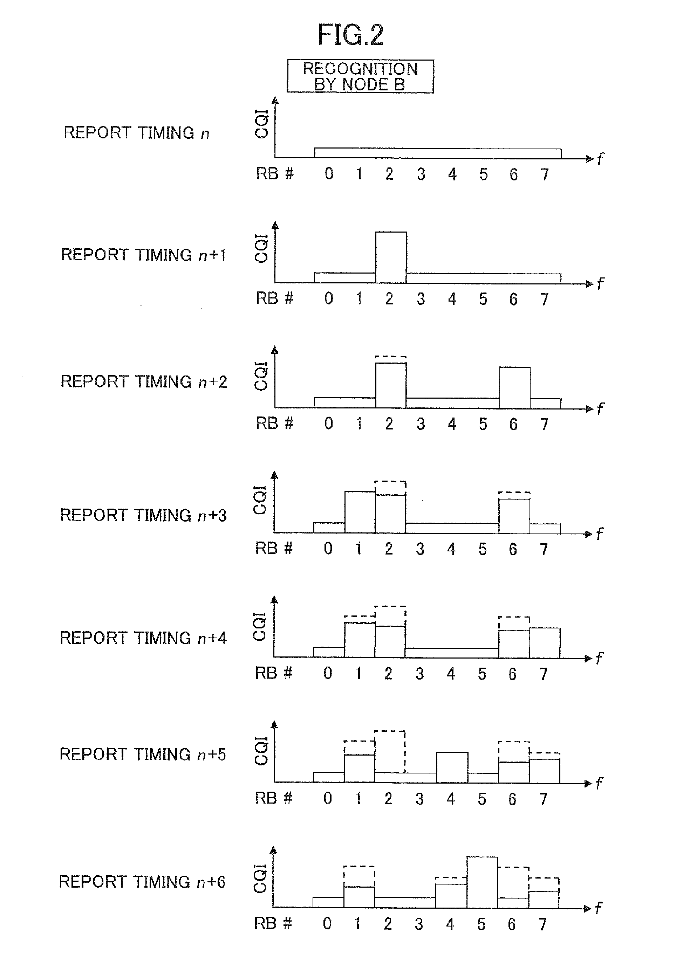

FIG. 2 shows an operation of the base station based on a modified example of the CQI report method of FIG. 1. As shown in FIG. 2, the CQI information (CQI values) used for the scheduling performed by the base station may be reduced in accordance with the elapsed time since the CQI information is stored in the memory. This is because the reliability of the CQI information may be degraded in accordance with the elapsed time.

For example, at report timing n+1, the CQI information of the resource block #2 is reported from the user equipment (UE) to the base station and stored in the memory of the base station. At report timing n+2, the CQI information of the resource block #6 is reported and stored in the memory of the base station. At the same time, the CQI value of the resource block #2 reported before is reduced by a predetermined value. At report timing n+3, the CQI value of the resource block #1 is reported from the user equipment. Then, each of the CQI values of the resource blocks #2 and #6 is reduced by a predetermined value. As described above, the CQI values stored in the memory are reduced as time elapses from when the CQI values are reported. However, when the CQI effective period (the reset cycle) is elapsed, the CQI values are reset to the latest average CQI value across the frequency band or the like.

According to the method of FIG. 2, it is possible to interpolate the reliability of the CQI information that is likely to be degraded as time elapsed. Therefore, more appropriate scheduling may be performed.

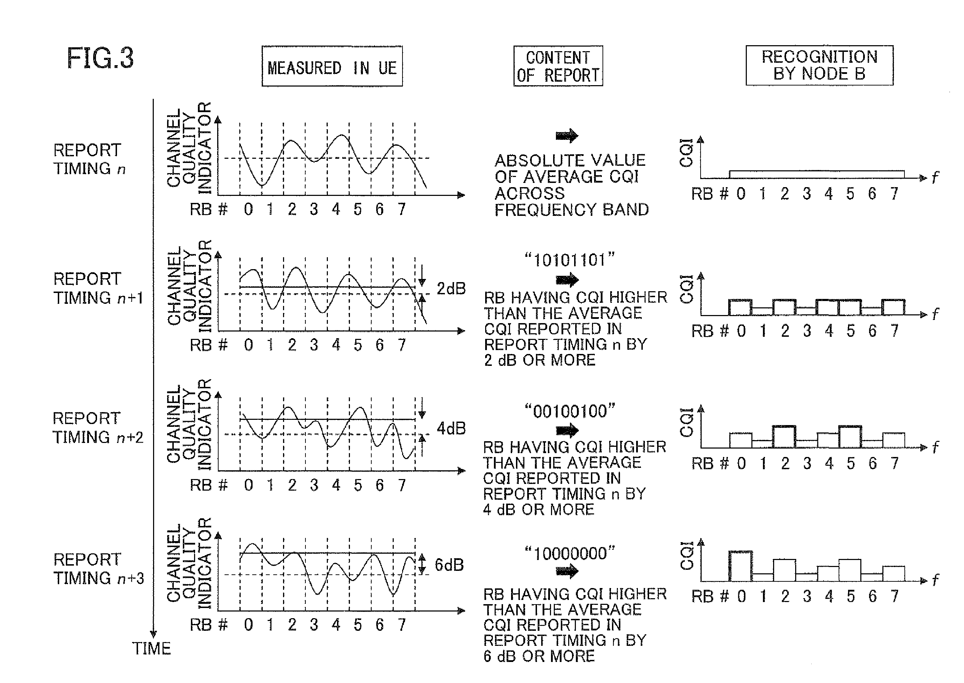

FIG. 3 shows a second example of CQI measurement/report method according to another embodiment of the present invention. In the CQI report method of FIG. 3, each user equipment compares the CQI of the resource blocks with the average CQI value across the frequency band of received signals and reports only the resource block number(s) of the resource block(s) having a (better) CQI value higher than the average CQI value by a predetermined value or more to the base station. The predetermined value used in the comparison between the CQI value and the average CQI value may differ in each report timing. Further, the base station reports relative information (relationships) between the report timings and the corresponding predetermined values indicating to what extent the CQI value should exceed the average value to the user equipment by using the upper layer (L3) signaling.

In the process shown in FIG. 3, similar to the process shown in FIG. 1, the base station reports the cycle of report timings of CQI (CQI report cycle) and the uplink radio resource to be used for CQI report (CQI feedback) with respect to each user equipment by using the upper layer (L3) signaling.

At report timing n (designated report timing), each user equipment reports the average CQI value across the frequency band of received signals. In the example of FIG. 3, similar to the case of FIG. 1, it is assumed that there are provided eight resources blocks (RBs) #0 through #7.

At report timing n+1, the user equipment reports the resource block number(s) of the resource block(s) having a CQI value higher than the average CQI value across the frequency band by 2dB or more based on the signaling information from the base station, the average CQI value being reported at report timing n. In this example of FIG. 3, the resource blocks #0, #2, #4, #5, and #7 have the CQI values higher than the average CQI value by 2dB or more. Therefore, bit "1" is mapped to those resource blocks and bit "0" is mapped to the rest of the resource blocks to report bit strings "10101101" to the base station.

In the base station, it is previously known that the resource block number(s) reported at report timing n+1 represents the resource block(s) having a CQI value higher than the average CQI value by 2dB or more. Therefore, the base station increases the CQI value(s) of the resource block(s) by 2dB.

At report timing n+2, the user equipment reports the resource block number(s) of the resource block(s) having a CQI value higher than the average CQI value across the frequency band by 4dB or more, the average CQI value being reported at report timing n. In this example of FIG. 3, the resource blocks #2, and #5 have the CQI values higher than the average CQI value by 4dB or more. Therefore, bit "1" is mapped to those resource blocks and bit "0" is mapped to the rest of the resource blocks to report bit strings "00100100" to the base station. In the base station, it is previously known that the resource block number(s) reported at report timing n+2 represents the resource block(s) having a CQI value higher than the average CQI value by 4dB or more. Therefore, the base station updates the CQI value of the resource blocks #2 and #5 stored in the memory.

At report timing n+3, the user equipment reports the resource block number(s) of the resource block(s) having a CQI value higher than the average CQI value across the frequency band by 6dB or more, the average CQI value being reported at report timing n. In this example, only the resource block #0 fulfills this condition. Therefore, bit strings "10000000" is reported to the base station. The base station updates the CQI value of the resource blocks #0 stored in the memory.

As described above, in this second example of the CQI report method of FIG. 3, the report timings are associated with values to what extent (dB) the CQI values exceed the average CQI value across the frequency band, and the associated data (relationships) are reported from the base station to each user equipment. Then, based on the reported relationships, the user equipment reports the resource block number(s) that fulfills the conditions of the relationships with respect to each report timing. More specifically, it is assumed that there are n report timings assigned between when the average CQI value is to be reported and when the next average CQI value is to be reported. At m (1≦ m≦n) report timing, only resource block(s) having the CQI value higher than the average CQI value by m (1≦m≦ n) level or more is selectively reported to the base station. Therefore, it may become possible to reduce an information amount necessary for reporting the CQI values.

Further, the method in FIG. 2 may be added to the method in FIG. 3. Namely, to make up for the reduction of the reliability as time elapsed, the CQI values stored in the memory of the base station may be reduced in accordance with the elapsed time from when the CQI values are reported.

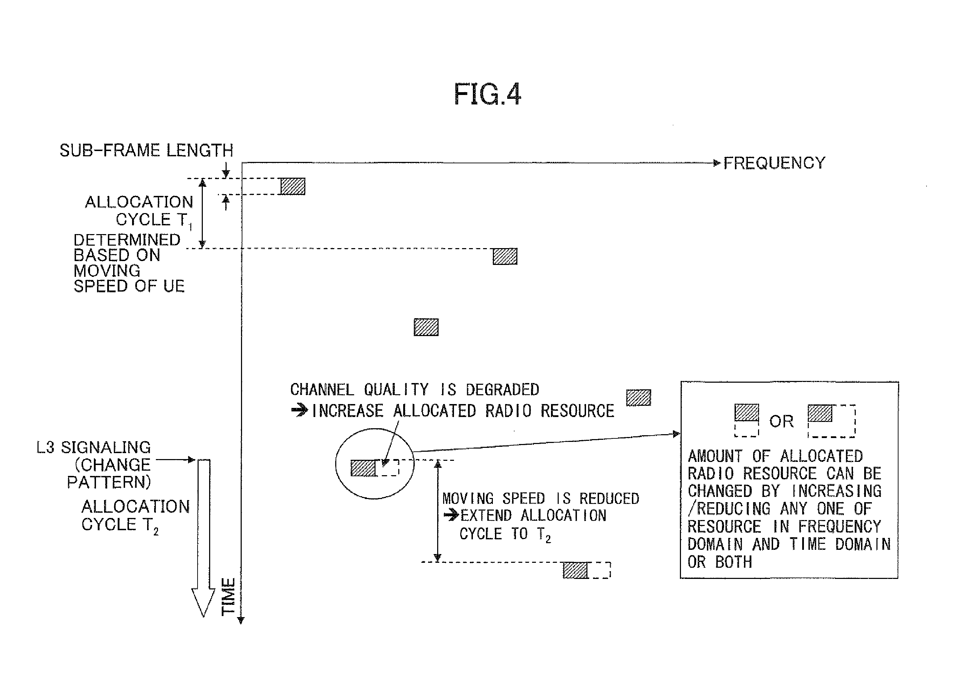

FIG. 4 shows an uplink radio resource allocation method performed by the base station for the CQI feedback.

The base station allocates uplink radio resource(s) to each user equipment based on a predetermined allocation pattern so that the user equipment reports the CQI information. The allocation pattern may be changed based on a moving speed and the channel quality indicator (CQI) of each user equipment and the total number of the user equipment. When the allocation pattern is changed, at least one of an amount of allocated resources and allocation cycle (report intervals) is changed. Further, the amount of allocated resources is changed by changing the resource amount in any one of frequency direction (domain) and time direction (domain) or both.

For example, with respect to a fast-moving user equipment, the allocation cycle (report intervals) of the resource block(s) for the CQI feedback is shortened so that downlink scheduling can follow the movement of the user equipment. On the other hand, with respect to a hardly-moving user equipment, the allocation cycle (report intervals) of the resource block(s) for the CQI feedback is made relatively longer (extended) to reduce the total number of bits required to report the CQI feedback.

In the example of FIG. 4, at present time, radio resources are allocated with an allocation cycle T1 (for example, every ten sub-frames) to a certain user equipment (UE). In this case, it is assumed that each of the allocated radio resources has the lengths of one sub-carrier in the frequency direction and one sub-frame in the time direction. The user equipment reports, for example, the CQI of the top one resource block (in the example of FIG. 1) or the resource block number(s) of the resource block(s) having the CQI value(s) higher than the average CQI value across the frequency band by a predetermined value or more (in the case of FIG. 3).

For a while, the CQI feedback is performed with the allocation cycle T1. Then, for example, it is assumed that the moving speed of the user equipment is reduced. In this case, the base station extends the allocation cycle of the radio resources from T1 to T2 (a first allocation pattern change). Then, the base station reports the changed (new) allocation cycle T2 (change report) to the user equipment by using the L3 signaling. After receiving the change report, the user equipment reports the CQI based on the received allocation cycle T2.

On the other hand, after the CQI feedback is performed with the allocation cycle T1 for a while, it is assumed that the CQI value reported from the user equipment is reduced. In this case, the base station increases an amount of the radio resources allocated to the user equipment (a second allocation pattern change). To increase the amount of radio resources, the allocated radio resources may be increased in the frequency direction (frequency domain), in the time direction (time domain), or both in frequency and time domains. Further, when the total number of user equipment in the same cell is decreased, the amount of radio resources per each user equipment for the CQI feedback may be increased.

Based on the change of the increase of the amount of the radio resources allocated to perform the CQI feedback, the base station reports the change of the allocation pattern (revised allocation pattern) to the user equipment. In this case, in the example of the CQI report method in FIG. 1, the base station reports the change (pattern change report) to the user equipment using the L3 signaling so that the user equipment reports the CQI information with respect to the top two resource blocks or the top four resource blocks to the base station. After receiving the pattern change report, the user equipment increases the number of bits for reporting the CQI information and reports the CQI information to the base station.

As described above, in response to the change of the moving speed or the channel quality indicator (CQI), the allocation pattern of the radio resources for the CQI feedback may be variably changed. By having this configuration, it may become possible to improve the use efficiency of the radio resources by controlling the number of bits used for the CQI report and appropriately perform a downlink frequency scheduling.

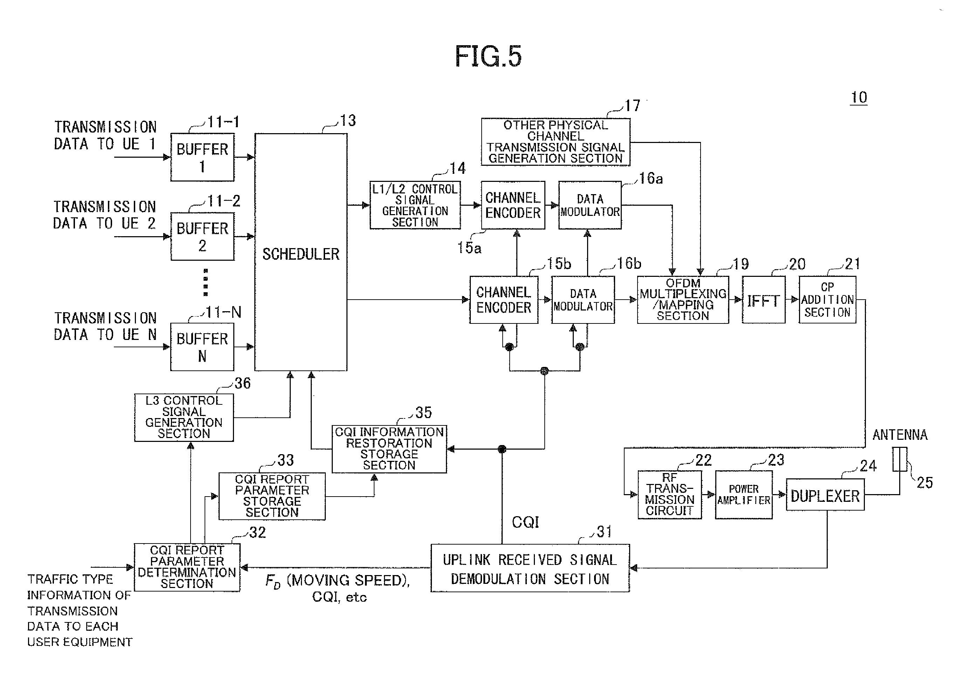

FIG. 5 shows an exemplary configuration of a base station apparatus 10 according to an embodiment of the present invention. As shown in FIG. 5, in the base station apparatus 10, an uplink signal received by an antenna 25 is demodulated by an uplink received signal demodulation section 31, so that the CQI information is extracted. In this case, the extracted CQI information may indicate a difference between the measured CQI value and the average CQI value across the frequency band with respect to the top one or more resource blocks as shown in FIG.1, or the resource block number(s) of the resource block(s) having the CQI value(s) higher than the average CQI value across the frequency band by a predetermined level (value) or more as shown in FIG. 3. The extracted CQI information is input to and stored in a CQI information restoration storage section 35.

The CQI information restoration storage section 35 restores and stores the channel quality indicator(s) (CQI value(s)) with respect to the resource block(s) of each user equipment based on the reported CQI information. Further, the CQI information restoration storage section 35 resets the stored CQI value(s) to the average CQI value across the frequency band of the received signals or the like when a predetermined CQI effective period is elapsed since the CQI value(s) is reported. Further, the CQI information restoration storage section 35 may reduce the stored CQI value(s) in accordance to a predetermined ratio as time elapsed since the CQI value(s) is reported.

The CQI information extracted by the uplink received signal demodulation section 31 along with moving speed information (Doppler frequency) f_{D} supplied from the user equipment are supplied to the a CQI report parameter determination section 32. The CQI report parameter determination section 32 determines CQI report parameters for about every one second or the like with respect to each user equipment based on the CQI report, the moving speed of the user equipment, traffic type information of transmission data to each user equipment, and the like.

For example, the CQI report parameters include the number N of the top of the resource blocks having the CQI information to be reported, the CQI effective period (the reset cycle) K in the base station, the cycle of report timings of CQI (CQI report cycle) (i.e., allocation cycle of radio resources), the uplink radio resource allocated to the user equipment for the CQI feedback, and, when the method of FIG. 3 is employed, the relationships between the report timings and values to what level (e.g. dB) the CQI values should exceed the average CQI value across the frequency band.

The determined CQI report parameters are stored in a CQI report parameter storage section 33 and input in an L3 control signal generation section 36 to be reported to the user equipment. When the determined CQI report parameters are changed, the L3 control signal generation section 36 generates an L3 control signal to report the content of the change to the user equipment. Based on the L3 control signal along with user data, a scheduler 13 performs a transmission scheduling. Further, as described above, by referring to the determined current CQI report parameters, the CQI information restoration storage section 35 restores a CQI absolute value of each resource block based on the demodulated CQI information and resets the CQI information when the CQI effective period (the reset cycle) K is elapsed since the CQI information is reported.

On the other hand, packet data to be transmitted to the user equipment 1 through N are stored in the corresponding buffers 11-1 through 11-N. The packet data to be transmitted to the user equipment and L3 control channel to report the CQI report parameters to the user equipment are input to the scheduler 13. Based on the restored CQI information from each user equipment, the scheduler 13 performs a scheduling of the transmission of the user data and the L3 control channel.

The user data and the L3 control channel that have been scheduled to be transmitted by the scheduler 13 are input to an OFDM multiplexing/mapping section 19 after being encoded and modulated by a channel encoder 15b and a data modulator 16b, respectively.

With respect to each user equipment, an L1/L2 control signal generation section 14 generates an L1/L2 control channel accompanying a downlink shared data channel (DL-SDCH). The generated L1/L2 control channel is also input to the OFDM multiplexing/mapping section 19 after being encoded and modulated by a channel encoder 15a and a data modulator 16a, respectively. Further, another physical channel transmission signal generation section 17 generates physical channels other than the L1/L2 control channel and the shared data channel (SDCH). For example, such physical channels includes a pilot channel, a physical paging channel, a physical broadcast channel (PBCH), an MBMS (Multimedia Broadcast Multicast Service) channel, and the like.

By the OFDM multiplexing/mapping section 19, those channels are divided and multiplexed into sub-carriers orthogonal to each other and mapped to a complex plane. Each complex-modulated OFDM sub-carrier signal is Inverse-Fast-Fourier-Transformed (IFFTed) by an IFFT section 20, and a CP (cyclic prefix) is added by a CP addition section 21. Then the signal is converted into an RF signal by an RF transmission circuit 22, amplified by a power amplifier 23, and transmitted from the antenna 25 via a duplexer 24.

By having this configuration, it may become possible to receive the CQI information from the user equipment at appropriate report timings with possibly fewer number of bits using appropriate uplink radio resources. Further, based on the received CQI information, a multi-user scheduling may be effectively performed.

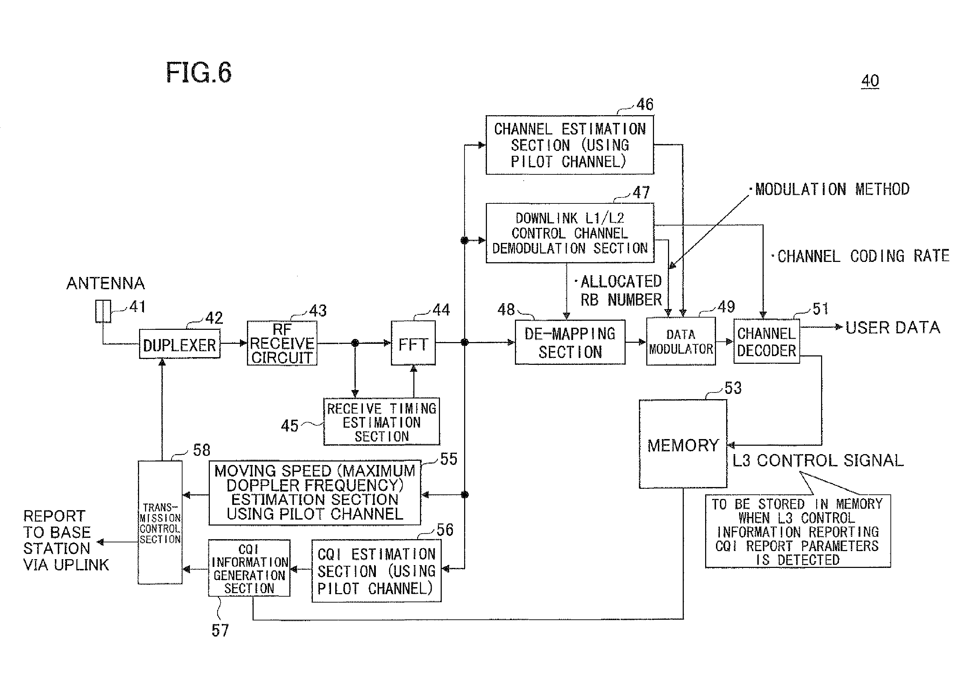

FIG. 6 is a schematic block diagram showing an exemplary configuration of the user equipment according to an embodiment of the present invention. In the user equipment 40 of FIG. 6, a signal received by an antenna 41 is input to an RF receive circuit 43 via a duplexer 42 and converted into an IF signal. Based on the IF signal, a receive timing estimation section 45 estimates the receive timings. Based on the estimated receive timings, the IF signal is Fast-Fourier-Transformed (FFTed) by an FFT section 44. The output of the FFT section 44 is input to each of a channel estimation section 46, a downlink L1/L2 control channel demodulation section 47, a de-mapping section 48, a moving speed estimation section 55, and a CQI estimation section 56.

The channel estimation section 46 performs a channel estimation with respect to, for example, each sub-carrier using the pilot channel and supplies the estimation result to a data demodulator 49. The downlink L1/L2 control channel demodulation section 47 demodulates the downlink L1/L2 control channel transmitted along with the data channel from the base station, extracts a data modulation method, a channel coding rate, and a resource block number(s) included in the receive bandwidth allocated to the user equipment, and reports the extracted data to the data demodulator 49, a channel decoder 51, and the de-mapping section 48, respectively. The de-mapping section 48 generates the original bit strings based on the output of the FFT section 44. The data demodulator 49 and the channel decoder 51 perform data demodulation and channel decoding, respectively, in accordance with the data modulation method and the channel coding rate used in the transmitter side. In this case, the L3 control channel that has been scheduled and transmitted from the base station 10 along with the user data is extracted and the CQI parameters included in the extracted L3 control channel are stored in a memory 53.

Based on the estimation result (CQI estimation values) estimated by a CQI estimation section 56, a CQI information generation section 57 refers to CQI measurement parameters and generates the CQI information. For example, in the method of FIG. 1, the CQI information generation section 57 generates the CQI information of the top N resource block(s) having higher CQI values and the resource block number(s) of the top N resource block(s). In this case, when a resource block whose CQI information is reported in at least one of the latest K report timings is included in the top N resource block(s), the CQI information of the resource block having the next highest CQI value except the CQI value(s) of the top N resource block(s) is integrated. On the other hand, in the method of FIG. 3, among the CQI report parameters, by referring to the information indicating the relationships between the report timings and by what extent (level) the resource block(s) to be selected is required to have the CQI value(s) higher than the corresponding average CQI value, in every report timings, the information generation section 57 generates the CQI information in a form of 0/1 bit strings indicating each number of resource block(s) having the CQI value(s) higher than the average CQI value by the level or more, each level being changed in accordance with the corresponding report timing.

By using a designated radio resource(s), the generated CQI information is transmitted from a transmission control section 58 via the antenna 41 to the base station 10 at every report timings (allocation cycle of radio resources for the CQI feedback) designated by the CQI report parameter from the base station 10.

On the other hand, the moving speed estimation section 55 estimates the maximum Doppler frequency f_{D} based on the spectrum data output from the FFT section 44. The estimated value is transmitted as moving speed information of the user equipment 40 from the transmission control section 58 via the antenna 41 to the base station 10 using a prescribed uplink channel.

By configuring in this way, it may become possible to reduce the number of bits representing the CQI information to be reported to the base station.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teachings herein set forth.

The present application is based on and claims the benefit of priority of Japanese Patent Application No.2006-272351, filed on October 3, 2006, the entire contents of which are hereby incorporated herein by reference.

## Claims

1. A CQI report method of reporting from a user equipment to a base station, the method comprising:
a step in which the user equipment reports CQI information of top N resource block(s) having a channel quality higher than the rest of the resource block(s) and a resource block number(s) of the top N resource block(s) to the base station at CQI report timings designated by the base station; and
a step in which, when a resource block(s) whose CQI information has already been reported in any of the latest K report timings is included in the top N resource block(s) or when a resource block(s) whose CQI information has already been reported in any of the latest K report timings and difference between current CQI and CQI reported in any of the latest K report timings is not higher than a predetermined improvement value, the user equipment excludes the resource block(s) and reports the CQI information of a resource block having the next highest channel quality indicator and the resource block number of the resource block to the base station.

2. The CQI report method according to claim 1, further comprising:
a step in which the user equipment receives a control signal reporting the values of N and K from the base station, wherein
based on the received values of N and K, the user equipment selects the CQI information of the top N resource block(s) and reports the selected CQI information to the base station.

3. The CQI report method according to claim 2, wherein
the base station reports the values of N and K to the user equipment by using an upper layer signaling.

4. The CQI report method according to claim 1, further comprising:
a step in which the user equipment reports an average CQI value across a frequency band of received signals at regular intervals in the assigned report timings to the base station, wherein
the CQI information of the top N resource block(s) represents difference between the average CQI value and a measured CQI value of each of the top N resource block(s).

5. The CQI report method according to claim 1, further comprising:
a step in which the base station stores the CQI information received from the user equipment for an effective period corresponding to a period of the K report timings and resets the CQI information after the effective period is elapsed.

6. The CQI report method according to claim 4, further comprising:
a step in which the base station stores the CQI information received from the user equipment for an effective period corresponding to a period of the K report timings and resets the CQI information to the average CQI value after the effective period is elapsed.

7. The CQI report method according to claim 1, further comprising:
a step in which the base station extracts a CQI value from the received CQI information and stores the extracted CQI value for an effective period corresponding to a period of the K report timings; and
a step of reducing the stored CQI value in accordance with passage of time from when the CQI information is received during the effective period.

8. A CQI report method of reporting from a user equipment to a base station, the method comprising:
a step in which the user equipment reports an average CQI value across a frequency band of received signals to the base station at regular intervals in the report timings assigned by the base station; and
a step in which, when there are n report timings between a report timing of reporting the average CQI value and the next report timing of reporting the average CQI value, at m (1≦m≦n) report timing, the user equipment reports information of a resource block(s) having the CQI value(s) higher than the average CQI value of m (1≦m≦n) report timing level or more to the base station.

9. The CQI report method according to claim 8, further comprising:
a step in which the base station reports relationships between the report timings and the corresponding levels of which the CQI value(s) should be higher than the average CQI value to the user equipment, wherein
based on the reported relationships, at m report timing, the user equipment selects a resource block(s) having the CQI value(s) higher than the average CQI value of m report timing level or more and reports the resource block number(s) of the selected resource block(s) to the base station.

10. The CQI report method according to claim 8, wherein
at m report timing, the user equipment reports bit strings to the base station, the bit strings being generated by mapping binary code in which the resource block(s) having the CQI value(s) higher than the average CQI value of m report timing level or more and the rest of the resource block(s) are represented.

11. An uplink radio resource allocation method for CQI feedback from a user equipment, the method comprising:
a step of reporting an allocation cycle of a radio resource(s) and an allocated radio resource(s) for the CQI feedback to the user equipment so that the user equipment reports CQI information to a base station;
a step in which the base station receives and stores the CQI information from the user equipment at the allocation cycle using the allocated radio resource(s); and
a step of changing at least one of the allocation cycle of the radio resource(s) for the CQI feedback or an amount of the allocated radio resource(s) for the CQI based on at least the CQI information and a moving speed of the user equipment.

12. The uplink radio resource allocation method for CQI feedback according to claim 11, further comprising:
a step in which the base station reports the allocation cycle, the allocated radio resource(s), and the result of the change to the user equipment using an upper layer signaling.

13. The uplink radio resource allocation method for CQI feedback according to claim 11, further comprising:
a step of, when channel quality at the user equipment is degraded based on the CQI information, increasing an amount of the radio resource(s) for the CQI feedback in at least one of frequency domain or time domain.

14. The uplink radio resource allocation method for CQI feedback according to claim 11, further comprising:
a step of, when the moving speed of the user equipment is reduced, extending the allocation cycle of the radio resource(s) for the CQI feedback.

15. A base station apparatus comprising:
a CQI information restoration storage section configured to restore CQI information reported from a user equipment and store the CQI information on a resource block to resource block basis; and
a CQI report parameter determination section configured to, based on the CQI information, determine CQI report parameters serving as indicators when the user equipment reports the CQI information, wherein
based on the current CQI report parameters determined by the CQI report parameter determination section, the CQI information restoration storage section resets the stored CQI information when a predetermined effective period is elapsed from when the CQI information is reported.

16. The base station apparatus according to claim 15, wherein
the CQI information restoration storage section reduces a value of the stored CQI information in accordance with passage of time from when the CQI information is received during the predetermined effective period.

17. The base station apparatus according to claim 15, wherein
the CQI report parameters include an allocation cycle of radio resource(s), the allocated radio resource(s), and the effective period so that the user equipment reports the CQI information, and the number of top N resource block(s) having higher CQI value(s) and to be reported from the user equipment.

18. The base station apparatus according to claim 15, wherein
the CQI report parameters include an allocation cycle of radio resource(s) and the allocated radio resource(s) so that the user equipment reports the CQI information, and relationships between the report timings and the corresponding levels of which the CQI value(s) at the report timings should be higher than an average CQI value across a frequency band of received signals.

19. The base station apparatus according to claim 15, wherein
the CQI report parameter determination section determines the CQI report parameters based on at least the CQI information reported from the user equipment or a moving speed of the user equipment.

20. The base station apparatus according to claim 15, further comprising:
an upper layer control signal generation section configured to generate an upper layer control signal to report the CQI information parameters.

21. The base station apparatus according to claim 20, further comprising:
a scheduler configured to, based on the CQI information, perform a transmission scheduling of the upper layer control signal and user data to be transmitted to each user equipment.

22. A user equipment comprising:
a CQI estimation section configured to estimate downlink channel quality with respect to each resource block in a frequency band of received signals;
a receive section configured to receive an upper layer control signal including allocation cycle of uplink radio resource, allocated radio resources, and report parameters to be used for reporting to report CQI information to a base station;
a CQI information generation section configured to generate CQI information from the CQI estimation result based on the report parameters; and
a transmission section configured to transmit the generated CQI information to the base station at allocation cycle of the radio resource using the allocated radio resources.

23. The user equipment according to claim 22, wherein
the CQI information generation section generates the CQI information including top N resource block(s) having higher estimated CQI value(s) and resource block number(s) of the top N resource block(s).

24. The user equipment according to claim 22, wherein
based on the report parameters, at a first report timing, the CQI information generation section generates a signal reporting a resource block(s) having CQI higher than an average CQI across the frequency band of received signals by a first level or more, and at a second report timing, the CQI information generation section generates a signal reporting a resource block(s) having CQI higher than an average CQI across the frequency band of received signals by a second level or more.
